(19) Europäisches Patentamt
European Patent Office
Office européen des brevets

(11) **EP 4 079 595 B1**

(12) # EUROPÄISCHE PATENTSCHRIFT

(45) Veröffentlichungstag und Bekanntmachung des Hinweises auf die Patenterteilung:
**18.02.2026   Patentblatt 2026/08**

(21) Anmeldenummer: **22166348.7**

(22) Anmeldetag: **01.04.2022**

(51) Internationale Patentklassifikation (IPC):
*B61L 15/00* (2006.01)          *B61L 25/02* (2006.01)
*G01S 19/01* (2010.01)          *G01S 19/21* (2010.01)
*B61F 3/16* (2006.01)

(52) Gemeinsame Patentklassifikation (CPC):
**B61L 15/0063; B61L 15/0081; B61L 25/021;
B61L 25/025; B61L 25/026; G01S 19/215;**
B61L 2205/04

(54) **EINRICHTUNG UND VERFAHREN ZUR POSITIONSBESTIMMUNG FÜR EIN SCHIENENFAHRZEUG**

DEVICE AND METHOD FOR DETERMINING THE POSITION OF A RAIL VEHICLE

DISPOSITIF ET PROCÉDÉ DE DÉTERMINATION DE LA POSITION POUR UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2021   DE 102021203898**

(43) Veröffentlichungstag der Anmeldung:
**26.10.2022   Patentblatt 2022/43**

(73) Patentinhaber: **Siemens Mobility GmbH
80997 München (DE)**

(72) Erfinder: **Johannes, Lars
38108 Braunschweig (DE)**

(74) Vertreter: **Siemens Patent Attorneys
Postfach 22 16 34
80506 München (DE)**

(56) Entgegenhaltungen:
EP-A1- 1 659 018          DE-B3- 102013 001 973
DE-T2- 602005 003 551

- **RALPH GLAUS: "Kinematic track surveying by means of a multi-sensor platform", DR. ALAIN GEIGER, 1 January 2006 (2006-01-01), XP055199621, Retrieved from the Internet <URL:http://dx.doi.org/10.3929/ethz-a-005168061> DOI: 10.3929/ethz-a-005168061**

**Beschreibung**

Die Positionsbestimmung eines Schienenfahrzeugs ist heute eine sehr wichtige Aufgabe im Schienenverkehr, weil davon unter anderem die Sicherheit einer eisenbahntechnischen Anlage abhängt. Wenn Fehler bei der Positionsbestimmung des Schienenfahrzeugs auftreten würden, könnte es zu Gefahren oder Unfällen mit schlimmen Folgen für beteiligte Personen und Anlagen kommen. Die Positionsbestimmung wird oft auch als Odometrie bezeichnet.

Solche Verfahren zur Positionsbestimmung sind beispielsweise beschrieben in Ralph Glaus: "Kinematic track surveying by means of a multi-sensor platform", 1. Januar 2006. Aus der DE 10 2013 001973 B3 ist eine Spurführung eines Schienenfahrzeugs bekannt.

Es ist daher die Aufgabe der vorliegenden Erfindung, eine verbesserte Einrichtung zur Positionsbestimmung für ein Schienenfahrzeug mit Sensoranordnung und ein verbessertes Verfahren zur Positionsbestimmung für ein Schienenfahrzeug bereitzustellen.

Gelöst wird diese Aufgabe erfindungsgemäß durch die Einrichtung zur Positionsbestimmung für ein Schienenfahrzeug mit Sensoranordnung nach Patentanspruch 1 und das Verfahren zur Positionsbestimmung nach Patentanspruch 10.

Die erfindungsgemäße Lösung hat den Vorteil, dass durch die Berücksichtigung der wenigstens zwei Positionsgeschwindigkeiten die Positionsbestimmung des Schienenfahrzeugs verbessert wird. Zum einen können die Positionsgeschwindigkeiten für eine Überprüfung einer bereits bestimmten Position des Schienenfahrzeugs, beispielsweise per GNSS-Daten, verwendet werden. Zum anderen können die Positionsgeschwindigkeiten als zusätzliche Eingangsgröße verwendet werden, um ein Ortungsergebnis genauer oder bewusster zu machen, oder beispielsweise bei ungünstigen Bedingungen, wie einer sehr niedrigen Geschwindigkeit oder in einem Tunnel, können die Positionsgeschwindigkeiten verwendet werden. Beispielsweise besteht bei Satellitennavigationssystemen das Problem, dass die daraus gewonnenen GNSS-Daten durch sogenanntes Spoofing verfälscht sein können. Diese durch Spoofing verfälschten GNSS-Daten können zu falschen Positionsberechnungen des Schienenfahrzeugs führen. Dies kann durch die erfindungsgemäße Lösung verhindert werden. Weiterhin kann durch die erfindungsgemäße Lösung auch zur Verbesserung eines Ortungssystems ohne Satellitennavigation genutzt werden.

Als Positionsgeschwindigkeit wird hier die Geschwindigkeit angesehen, die für eine bestimmte Position am Schienenfahrzeug gilt, für die sie gemessen bzw. bestimmt wird. Bei einer Kurvenfahrt hat bekanntlich eine äußere Position am Schienenfahrzeug eine andere Geschwindigkeit als eine innere Position. Es herrschen also positionsabhängig unterschiedliche Geschwindigkeiten, die hier daher als Positionsgeschwindigkeiten bezeichnet werden. Diese beziehen sich auf die bestimmte Position. Wenn beispielsweise die Geschwindigkeit über einen an einem Rad angeordneten Weginkrementalgeber ermittelt wird, gilt die Geschwindigkeit für die Position des Rades quer zur Fahrrichtung.

Die erfindungsgemäße Sensoranordnung verwendet zur Ermittlung der Positionsgeschwindigkeiten die wenigstens zwei am Schienenfahrzeug anbringbaren Sensoren. Diese sind an quer zur Fahrtrichtung unterschiedlichen Positionen am Schienenfahrzeug angeordnet und ermitteln dort jeweils eine Positionsgeschwindigkeit. Aus diesen wenigstens zwei Positionsgeschwindigkeiten kann als Rechengröße beispielsweise eine zentrale Geschwindigkeit des Schienenfahrzeugs ermittelt werden, die man auch als Zentralgeschwindigkeit bezeichnen könnte. Dies kann beispielsweise eine Winkelgeschwindigkeit oder eine gemittelte Geschwindigkeit sein.

Bei dem erfindungsgemäßen Verfahren werden die Positionsgeschwindigkeiten ermittelt und für die Positionsbestimmung des Schienenfahrzeugs verwendet.

Die Erfindung betrifft eine Einrichtung zur Positionsbestimmung für ein Schienenfahrzeug mit wenigstens einer Satellitennavigationseinrichtung, die zur Bereitstellung von GNSS-Daten ausgebildet ist.

Erfindungsgemäß ist die Einrichtung mit wenigstens einer Sensoranordnung nach der zuvor genannten Ausführungsform ausgestaltet und weist wenigstens eine Überprüfungseinrichtung auf, die zur Überprüfung der durch die Satellitennavigationseinrichtung bereitgestellten GNSS-Daten oder einer daraus ermittelten Position mittels der von der Sensoranordnung ermittelten Positionsgeschwindigkeiten ausgebildet ist. Dies hat den Vorteil, dass beispielsweise verfälschte GNSS-Daten durch sogenanntes Spoofing direkt erkannt werden und eine fehlerhafte Positionsbestimmung des Schienenfahrzeugs dadurch vermieden werden kann.

Die erfindungsgemäße Lösung kann durch vorteilhafte Ausgestaltungen weiterentwickelt werden, wie sie im Folgenden beschrieben sind.

So kann wenigstens einer der Sensoren in einer vorteilhaften Weiterbildung der erfindungsgemäßen Sensoranordnung als ein mit einem Rad verbundener Weginkrementalgeber ausgebildet sein, wobei das Rad nicht durch eine starre Achse mit einem quer zur Fahrtrichtung gegenüberliegendem Rad verbunden ist. Dies hat den Vorteil, dass Weginkrementalgeber bei Schienenfahrzeugen häufig bereits im Einsatz sind und damit insbesondere für eine Nachrüstung eine kostengünstige Lösung darstellen. Wichtig ist hierbei, dass das für den Weginkrementalgeber verwendete Rad unabhängig und nicht durch eine starre Achse mit einem gegenüberliegenden Rad verbunden ist. Durch eine starre Achse würden bei einer Kurvenfahrt die Werte des Inkrementalgebers verfälscht, weil in einer Kurve das äußere Rad einen größeren Weg zurücklegt als das innere Rad und dies durch eine starre Achse verhindert werden würde.

Um beispielsweise unabhängig von den Rädern des Schienenfahrzeugs messen zu können, kann wenigstens einer der Sensoren als optischer oder induktiver Sensor ausgebildet sein. Ein optischer Sensor kann beispielsweise eine Kamera sein oder ein nach dem Prinzip von Spatial Filter Velocimetry arbeitender Sensor sein. Optische Sensoren schauen üblicherweise auf den Schienenkopf und induktive Sensoren häufig auf die Schienenfußverschraubungen, da diese induktiv gut zu detektieren sind. Sowohl optische als auch induktive Sensoren erfassen eine Relativbewegung des Schienenfahrzeugs zur Fahrstrecke. Selbstverständlich kann alternativ auch einer der Sensoren oder beide als Dopplerradar ausgebildet sein.

Die erfindungsgemäßen Sensoren sind zur Ermittlung einer Positionsgeschwindigkeit ausgebildet. Mit der Positionsgeschwindigkeit ist hier eine Relativbewegung an der bestimmten Position des Schienenfahrzeugs gegenüber der Fahrstrecke oder dem Boden zu verstehen. Dabei erfassen die Sensoren einen zurückgelegten Weg in einer gemessenen Zeit und bestimmen daraus wie allgemein üblich die Geschwindigkeit.

Ferner können die Sensoren quer zur Fahrrichtung im Wesentlichen direkt gegenüberliegend angeordnet sein. Dies hat den Vorteil, dass die ermittelten Positionsgeschwindigkeiten der Sensoren leicht für die Positionsüberprüfung verwendet werden können.

Um insbesondere bei optischen oder induktiven Sensoren eine gute Sicht auf die Fahrstrecke unterhalb des Fahrzeugs zu gewährleisten, können die Sensoren in Fahrtrichtung gesehen zwischen zwei Rädern des Schienenfahrzeugs angeordnet sein.

In einer weiteren vorteilhaften Ausgestaltung können die Sensoren quer zur Fahrrichtung im Wesentlichen mit einem gleichen Abstand zur Mitte des Schienenfahrzeugs angeordnet sein. Es wird hier angenommen, dass die Mitte des Schienenfahrzeugs gleich ist mit der Mitte zwischen den Rädern. Die Mitte befindet sich daher in der Mitte zwischen den Schienen. So kann zur Bestimmung der mittleren Geschwindigkeit einfach das Mittel der beiden Positionsgeschwindigkeiten genommen werden.

Ferner kann die Sensoranordnung ausgebildet sein, eine Winkelgeschwindigkeit des Schienenfahrzeugs zu ermitteln. Die Verwendung der Winkelgeschwindigkeit ist vorteilhaft, weil diese direkt mit einer aus GNSS-Daten berechneten Winkelgeschwindigkeit verglichen werden kann. Alternativ kann aus der Winkelgeschwindigkeit auch eine Trajektorie berechnet werden und diese anschließend mit einer aus GNSS-Daten berechneten Trajektorie verglichen werden. Die Sensoranordnung kann weiterhin ausgebildet sein, die Winkelgeschwindigkeit des Schienenfahrzeugs anhand der Formel

$$\omega = \frac{v_1 - v_2}{\Delta r}$$

zu ermitteln, wobei $v_1$ und $v_2$ mittels der Sensoren ermittelten Positionsgeschwindigkeiten sind und $\Delta r$ ein Abstand der Sensoren zueinander ist.

Die Sensoranordnung kann zusätzlich auch ausgebildet sein, eine gemittelte Geschwindigkeit des Schienenfahrzeugs zu ermitteln. Als gemittelte Geschwindigkeit wird die Geschwindigkeit des Schienenfahrzeugs in seiner Fahrzeugmitte angesehen. Beim Schienenfahrzeug dreht das kurveninnere Rad langsamer und das kurvenäußere Rad schneller als dies in der Fahrzeugmitte der Fall wäre. Die gemittelte Geschwindigkeit ist die Geschwindigkeit in der Fahrzeugmitte des Schienenfahrzeugs. Bei Einsatz eines Sensors an einer Fahrzeugseite könnten Schlupfdetektionsalgorithmen in Kurven anschlagen, was nicht gewünscht wäre. Beispielsweise könnte das Fahrzeug dann fehlerhaft mit einer niedrigeren Geschwindigkeit betrieben werden und es würde seinen Fahrplan nicht einhalten.

Erfindungsgemäß ist die Überprüfungseinrichtung ausgebildet, eine mittels der GNSS-Daten ermittelte Winkelgeschwindigkeit mit einer von der Sensoranordnung ermittelten Winkelgeschwindigkeit zu vergleichen und eine Aktion auszulösen, wenn eine Differenz der beiden Winkelgeschwindigkeiten über einen vorbestimmten Grenzwert hinausgeht.

Die Erfindung betrifft ferner ein Schienenfahrzeug, das wenigstens eine erfindungsgemäße Einrichtung zur Positionsbestimmung nach einer der zuvor genannten Ausführungsformen aufweist.

In einer vorteilhaften Ausgestaltung des erfindungsgemäßen Verfahrens können eine Winkelgeschwindigkeit und/oder eine gemittelte Geschwindigkeit des Schienenfahrzeugs ermittelt werden. Dies hat die oben bereits beschriebenen gleichen Vorteile wie bei der entsprechenden Ausführungsform der erfindungsgemäßen Sensoranordnung.

Um die Position durch ein Satellitennavigationssystem zu überprüfen, werden erfindungsgemäß die GNSS-Daten von wenigstens einer Satellitennavigationseinrichtung des Schienenfahrzeugs bereitgestellt und die GNNS-Daten oder eine daraus ermittelte Position mittels der von der Sensoranordnung ermittelten Positionsgeschwindigkeiten überprüft.

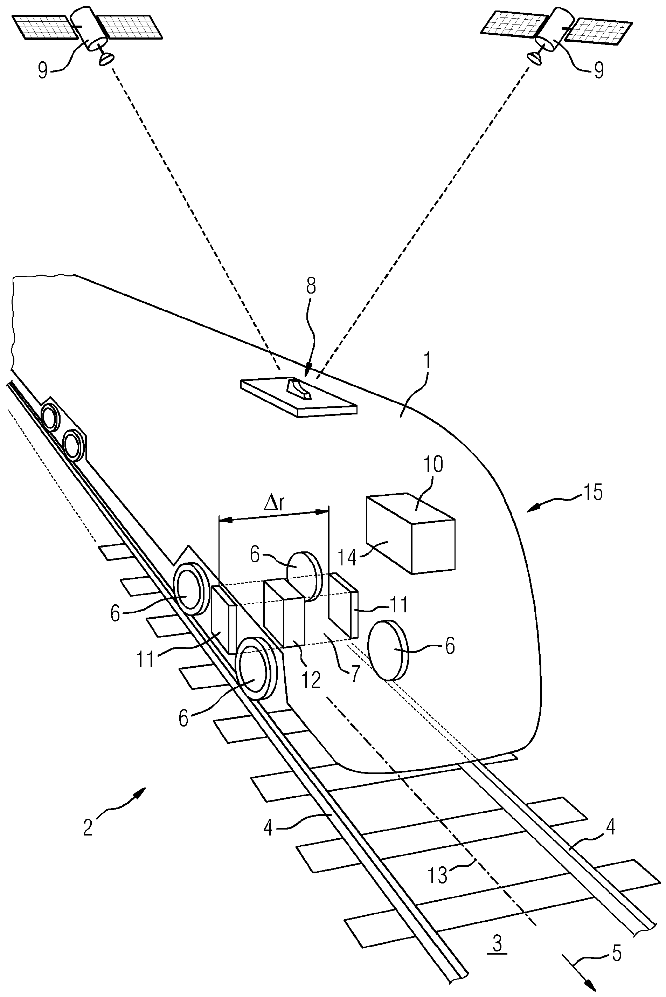

Im Folgenden wird die Erfindung mit Bezug auf die beigefügte Zeichnung erläutert.

Die einzige Figur zeigt eine schematische Darstellung einer beispielhaften Ausführungsform eines erfindungsgemäßen Schienenfahrzeugs.

In der Figur ist eine beispielhafte Ausführungsform eines erfindungsgemäßen Schienenfahrzeugs 1 gezeigt, das Teil einer eisenbahntechnischen Anlage 2 ist. Neben dem Schienenfahrzeug 1 umfasst die eisenbahntechnische Anlage 2 auch eine Fahrstrecke 3 mit Schienen 4, auf der sich das Schienenfahrzeug 1 in einer Fahrtrichtung 5 bewegt. Das Schienenfahrzeug 1 kann beispielsweise ein Fernzug, Güterzug, Regionalzug, eine U-Bahn oder eine Straßenbahn sein und ist in bekannter Weise ausgeführt. So umfasst das Schienenfahrzeug 1 eine Vielzahl von Rädern 6, von denen nur einige beispielhaft dargestellt sind und die in bekannter Weise in Kontakt mit den Schienen 4 stehen. Weiterhin umfasst das Schienenfahrzeug 1 wenigstens eine Sensoranordnung 7 und eine Sattelitennavigationseinrichtung 8.

Die Satellitennavigationseinrichtung 8 ist in bekannter Weise ausgestaltet und bestimmt aus Signalen von Satelliten 9 GNSS-Daten, aus denen eine Position des Schienenfahrzeugs 1 in bekannter Weise ermittelt werden kann. Die Abkürzung GNSS steht für Global Navigation Satellit System. Bekannte Beispiele für Satellitennavigationssysteme, die auf GNSS basieren, sind das europäische System Galileo, das amerikanische System GPS oder das russische System GLONASS. Aus dem von der Satellitennavigationseinrichtung 8 ermittelten GNSS-Daten kann die Position des Schienenfahrzeugs 1 ermittelt werden. Dies kann entweder direkt von der Satellitennavigationseinrichtung 8 geschehen oder auch durch eine im Schienenfahrzeug 1 befindliche Recheneinheit 10. Die Recheneinheit 10 kann beispielsweise ein Teil eines Bordcomputers sein. Die mittels der GNSS-Daten ermittelte Position des Schienenfahrzeugs 1 kann allerdings fehlerhaft sein. Dies kann beispielsweise durch sogenanntes Spoofing geschehen, bei dem durch Störsignale falsche Positionsdaten ermittelt werden.

Um diesem Problem zu begegnen, weist das erfindungsgemäße Schienenfahrzeug 1 die Sensoranordnung 7 auf. Die Sensoranordnung 7 umfasst zwei Sensoren 11 und eine Verarbeitungseinrichtung 12.

Die Sensoren 11 sind jeweils zum Ermitteln einer Positionsgeschwindigkeit ausgebildet und an unterschiedlichen Positionen am Schienenfahrzeug 1 angeordnet. Als Positionsgeschwindigkeit ist hier die durch den jeweiligen Sensors 11 für eine bestimmte Position am Schienenfahrzeug 1 ermittelte Geschwindigkeit relativ zur Fahrstrecke 3 zu verstehen.

Die Sensoren 11 können jeweils beispielsweise als mit einem Rad 6 verbundene Weginkrementalgeber, optische oder induktive Sensoren ausgebildet sein. Bei der Ausführung als Weginkrementalgeber ist dieser mit einem Rad 6 des Schienenfahrzeugs 1 verbunden, so dass die Bewegung des Rades 6 durch den Weginkrementalgeber erfasst wird und dadurch die Geschwindigkeit an der Position des Rades 6 ermittelt werden kann. Der Weginkrementalgeber muss an einem Rad 6 angeordnet sein, welches nicht durch eine starre Achse mit dem entsprechenden quer zur Fahrtrichtung 5 gegenüberliegenden Rad 6 verbunden ist. Ansonsten wäre die gemessene Positionsgeschwindigkeit in einer Kurve verfälscht. Bei einer Ausführung als optischer Sensor erfasst dieser beispielsweise die Bewegung des Schienenfahrzeugs 1 an der entsprechenden Position relativ zum Schienenkopf der entsprechenden Schiene 4. Bei der Ausführung als induktiver Sensor kann dieser beispielsweise die passierten Schienenfußverschraubungen erfassen und dadurch den zurückgelegten Weg und die Positionsgeschwindigkeit.

Idealerweise sind die Sensoren 11 quer zur Fahrtrichtung 5 direkt gegenüberliegend und mit gleichem Abstand zu einer Mitte 13 des Schienenfahrzeugs 1 angeordnet. Bei der beispielhaften Ausführungsform in der Figur sind die Sensoren 11 weiterhin jeweils in Fahrtrichtung 5 gesehen zwischen zwei Rädern 6 des Schienenfahrzeugs 1 angeordnet. Dabei befinden sich die Sensoren 11 im Wesentlichen auf gleicher Linie mit den Rädern 6, so dass die Sensoren 11 jeweils über der jeweiligen Schiene 4 der Fahrstrecke 3 angeordnet sind.

Die erfindungsgemäße Sensoranordnung 7 ermittelt aus den Positionsgeschwindigkeiten $v_1$, $v_2$ eine Winkelgeschwindigkeit $\omega$ des Schienenfahrzeugs 1. Die Winkelgeschwindigkeit $\omega$ kann anhand der Formel

$$\omega = \frac{v_1 - v_2}{\Delta r}$$

ermittelt werden, wobei $v_1$ und $v_2$ die mittels der Sensoren ermittelten Positionsgeschwindigkeiten sind und $\Delta r$ der Abstand der Sensoren zueinander ist. Die Ermittlung der Winkelgeschwindigkeit $\omega$ kann entweder durch die Sensoranordnung 7 selbst oder durch die Recheneinheit 10 geschehen. Anschließend kann beispielsweise die Recheneinheit 10 die von der Sensoranordnung 7 ermittelte Winkelgeschwindigkeit $\omega$ nutzen, um die GNSS-Daten der Satellitennavigationseinrichtung 8 zu überprüfen. Aus den GNSS-Daten kann nämlich ebenfalls eine Winkelgeschwindigkeit $\omega$ des Schienenfahrzeugs 1 ermittelt werden. Anschließend können die beiden ermittelten Winkelgeschwindigkeiten miteinander verglichen werden. Innerhalb der Recheneinheit 10 ist hierfür eine Überprüfungseinrichtung 14 ausgebildet, die zur Überprüfung der durch die Satellitennavigationseinrichtung 8 bereitgestellten GNSS-Daten oder einer daraus ermittelten Position ausgebildet ist. Die Überprüfungseinrichtung 14 löst einen Alarm aus, wenn eine Differenz zwischen der aus GNSS-Daten ermittelten Winkelgeschwindigkeit und der aus den Positionsgeschwindigkeiten ermittelten Winkelgeschwindigkeit einen vorbestimmten Grenzwert übersteigt.

Die Sensoranordnung 7, die Satellitennavigationseinrichtung 8 und die Überprüfungseinrichtung 14 bilden zusammen eine erfindungsgemäße Einrichtung 15 zur Positionsbestimmung für das Schienenfahrzeug 1 aus.

Die erfindungsgemäße Sensoranordnung 7 kann zusätzlich auch für die Ermittlung einer mittleren Geschwindigkeit verwendet werden. Bei einem Schienenfahrzeug 1 ist bei einer Kurvenfahrt die Geschwindigkeit an der Position der kurveninneren Räder geringer und an der Position der kurvenäußeren Rädern 6 höher als die mittlere Geschwindigkeit in der Mitte 13. Daher kann die mittlere Geschwindigkeit in vorteilhafter Weise verwendet werden, weil diese auch bei einer Kurvenfahrt nicht verfälscht ist.

**Patentansprüche**

1. Einrichtung (15) zur Positionsbestimmung für ein Schienenfahrzeug (1),

   mit wenigstens einer Satellitennavigationseinrichtung (8), die zur Bereitstellung von GNSS-Daten ausgebildet ist, und mit wenigstens einer Sensoranordnung (7) zur Positionsbestimmung für das Schienenfahrzeug (1),
   wobei die Sensoranordnung (7) wenigstens zwei am Schienenfahrzeug (1) anbringbare Sensoren (11) ausweist, die jeweils zum Ermitteln einer Positionsgeschwindigkeit ausgebildet und an quer zur Fahrrichtung (5) unterschiedlichen Positionen am Schienenfahrzeug (1) angeordnet sind, und
   wenigstens eine Verarbeitungseinrichtung (12) aufweist, die zum Verarbeiten der von den Sensoren (11) ermittelten Positionsgeschwindigkeiten ausgebildet ist, wobei
   die Sensoranordnung (7) ausgebildet ist, eine Winkelgeschwindigkeit $\omega$ des Schienenfahrzeugs (1) zu ermitteln,
   **dadurch gekennzeichnet, dass** die Einrichtung (15) wenigstens eine Überprüfungseinrichtung (14) aufweist, die zur Überprüfung der durch die Satellitennavigationseinrichtung (8) bereitgestellten GNSS-Daten oder einer daraus ermittelten Position ausgebildet ist, und
   die Überprüfungseinrichtung (14) ausgebildet ist, eine mittels der GNSS-Daten ermittelte Winkelgeschwindigkeit mit der von der Sensoranordnung (7) ermittelten Winkelgeschwindigkeit zu vergleichen und eine Aktion auszulösen, wenn eine Differenz der beiden Winkelgeschwindigkeiten über einen vorbestimmten Grenzwert hinausgeht.

2. Einrichtung (15) nach Anspruch 1,
   **dadurch gekennzeichnet, dass**
   wenigstens einer der Sensoren (11) als ein mit einem Rad (6) verbundener Weginkrementalgeber ausgebildet ist, wobei das Rad (6) nicht durch eine starre Achse mit einem quer zur Fahrtrichtung (5) gegenüberliegendem Rad (6) verbunden ist.

3. Einrichtung (15) nach Anspruch 1 oder 2,
   **dadurch gekennzeichnet, dass**
   wenigstens einer der Sensoren (11) als optischer oder induktiver Sensor ausgebildet ist.

4. Einrichtung (15) nach einem der oben genannten Ansprüche,
   **dadurch gekennzeichnet, dass**
   die Sensoren (11) quer zur Fahrrichtung (5) im Wesentlichen direkt gegenüberliegend angeordnet sind.

5. Einrichtung (15) nach einem der oben genannten Ansprüche,
   **dadurch gekennzeichnet, dass**
   die Sensoren (11) in Fahrtrichtung (5) gesehen zwischen zwei Rädern (6) des Schienenfahrzeugs (1) angeordnet sind.

6. Einrichtung (15) nach einem der oben genannten Ansprüche,
   **dadurch gekennzeichnet, dass**
   die Sensoren (11) quer zur Fahrrichtung (5) im Wesentlichen mit einem gleichen Abstand von einer Mitte (13) des Schienenfahrzeugs (1) angeordnet sind.

7. Einrichtung (15) nach einem der oben genannten Ansprüche,
   **dadurch gekennzeichnet, dass**
   die Sensoranordnung (7) ausgebildet ist, die Winkelgeschwindigkeit $\omega$ des Schienenfahrzeugs (1) anhand der Formel $\omega = \frac{v_1 - v_2}{\Delta r}$ zu ermitteln, wobei $v_1$ und $v_2$ mittels der Sensoren (11) ermittelten Positionsgeschwindigkeiten sind und $\Delta r$ ein Abstand der Sensoren (11) zueinander ist.

8. Einrichtung (15) nach einem der oben genannten Ansprüche 1 bis 6,
   **dadurch gekennzeichnet, dass**
   die Sensoranordnung (7) ausgebildet ist, eine gemittelte Geschwindigkeit des Schienenfahrzeugs (1) zu ermitteln.

9. Schienenfahrzeug (1),
   **dadurch gekennzeichnet, dass**
   das Schienenfahrzeug (1) wenigstens eine Einrichtung (15) zur Positionsbestimmung nach einem der oben genannten Ansprüche aufweist.

10. Verfahren zur Positionsbestimmung für ein Schienenfahrzeug (1),

    bei dem wenigstens zwei Positionsgeschwindigkeiten an jeweils quer zur Fahrrichtung unterschiedlichen Positionen des Schienenfahrzeugs (1) ermittelt werden,
    bei dem die wenigstens zwei Positionsgeschwindigkeiten verarbeitet und für die Positionsbestimmung des Schienenfahrzeugs (1) verwendet werden und
    bei dem eine Winkelgeschwindigkeit $\omega$ des Schienenfahrzeugs (1) ermittelt wird,
    **dadurch gekennzeichnet, dass**
    GNSS-Daten von wenigstens einer Satellitennavigationseinrichtung (8) des Schienenfahrzeugs (1) bereitgestellt werden und die GNSS-Daten oder eine daraus ermittelte Position überprüft werden, wobei eine mittels der GNSS-Daten ermittelte Winkelgeschwindigkeit mit der von der Sensoranordnung (7) ermittelten Winkelgeschwindigkeit verglichen werden und eine Aktion ausgelöst wird, wenn eine Differenz der beiden Winkelgeschwindigkeiten über einen vorbestimmten Grenzwert hinausgeht.

## Claims

1. Apparatus (15) for position determination for a rail vehicle (1),

   having at least one satellite navigation apparatus (8) which is designed to provide GNSS data, and having
   at least one sensor arrangement (7) for position determination for the rail vehicle (1),
   wherein the sensor arrangement (7) has at least two sensors (11) which can be attached to the rail vehicle (1), these being designed in each case to ascertain a position speed and being arranged on the rail vehicle (1) at different positions transverse to the direction of travel (5), and
   at least one processing apparatus (12) which is designed to process the position speeds that are ascertained by the sensors (11), wherein the sensor arrangement (7) is designed to ascertain an angular velocity $\omega$ of the rail vehicle (1),
   **characterised in that**
   the apparatus (15) has at least one checking apparatus (14) which is designed to check the GNSS data provided by the satellite navigation apparatus (8) or a position ascertained therefrom and
   the checking apparatus (14) is designed to compare an angular velocity ascertained by means of the GNSS data with the angular velocity ascertained by the sensor arrangement (7) and to trigger an action if a difference between the two angular velocities exceeds a predetermined limit value.

2. Apparatus (15) according to claim 1,
   **characterised in that**
   at least one of the sensors (11) is designed as an incremental distance indicator connected to a wheel (6), wherein the wheel (6) is not connected via a rigid axle to an opposite wheel (6) transverse to the direction of travel (5).

3. Apparatus (15) according to claim 1 or 2,
   **characterised in that**
   at least one of the sensors (11) is designed as an optical or inductive sensor.

4. Apparatus (15) according to one of the afore-cited claims,
   **characterised in that**
   the sensors (11) are arranged essentially directly opposite each other transverse to the direction of travel (5).

5. Apparatus (15) according to one of the afore-cited claims,
   **characterised in that**
   the sensors (11) are arranged between two wheels (6) of the rail vehicle (1) as viewed in the direction of travel (5).

6. Apparatus (15) according to one of the afore-cited claims,
   **characterised in that**
   the sensors (11) are so arranged transverse to the direction of travel (5) as to have an essentially identical separation from a midpoint (13) of the rail vehicle (1).

7. Apparatus (15) according to one of the afore-cited claims,
   **characterised in that**
   the sensor arrangement (7) is designed to ascertain the angular velocity $\omega$ of the rail vehicle (1) using the

   formula $\omega = \dfrac{v_1 - v_2}{\Delta r}$, wherein $v_1$ and $v_2$ are position speeds ascertained by means of the sensors (11) and $\Delta r$ is a separation of the sensors (11) from each other.

8. Apparatus (15) according to one of the afore-cited claims 1 to 6,
   **characterised in that** the sensor arrangement (7) is designed to ascertain an average speed of the rail vehicle (1).

9. Rail vehicle (1)
   **characterised in that**
   the rail vehicle (1) has at least one apparatus (15) for position determination according to one of the afore-cited claims.

10. Method for position determination for a rail vehicle (1), wherein at least two position speeds are ascertained at respectively different positions of the rail vehicle (1) transverse to the direction of travel,

    wherein the at least two position speeds are processed and used for the position determination of the rail vehicle (1) and
    wherein an angular velocity $\omega$ of the rail vehicle (1) is ascertained,
    **characterised in that**
    GNSS data is provided by at least one satellite navigation apparatus (8) of the rail vehicle (1) and the GNSS data or a position ascertained therefrom is checked, wherein an angular velocity ascertained by means of the GNSS data is compared with the angular velocity ascertained by the sensor arrangement (7) and an action is triggered if a difference between the two angular velocities exceeds a predetermined limit value.

**Revendications**

1. Dispositif (15) de détermination de la position d'un véhicule (1) ferroviaire,

   comprenant au moins un dispositif (8) de navigation par satellite, qui est constitué pour disposer de données GNSS, et comprenant au moins un agencement (7) de capteurs pour la détermination de positions du véhicule (1) ferroviaire,

   dans lequel l'agencement (7) de capteurs a au moins deux capteurs (11) pouvant être montés sur le véhicule (1) ferroviaire, qui sont constitués respectivement pour la détermination d'une vitesse de position et qui sont montés sur le véhicule (1) ferroviaire en des positions différentes transversalement au sens (5) de circulation, et

   au moins un dispositif (12) de traitement, qui est constitué pour le traitement des vitesses de position déterminées par les capteurs (11), dans lequel

   l'agencement (7) de capteurs est constitué pour déterminer une vitesse $\omega$ angulaire du véhicule (1) ferroviaire,

   **caractérisé en ce que**

   le dispositif (15) a au moins un dispositif (14) de vérification, qui est constitué pour la vérification des données GNNS données par le dispositif (8) de navigation par satellite ou d'une position, qui en est déterminée, et

   le dispositif (14) de vérification est constitué pour comparer une vitesse angulaire déterminée au moyen des données GNSS à une vitesse angulaire déterminée par l'agencement (7) de capteurs et déclencher une action, si une différence entre les deux vitesses angulaires va au-delà d'une valeur limite déterminée à l'avance.

2. Dispositif (15) suivant la revendication 1,
   **caractérisé en ce qu'**
   au moins l'un des capteurs (11) est constitué sous la forme d'un capteur incrémental de déplacement relié à une roue (6), dans lequel la roue (6) n'est pas reliée par un essieu rigide à une roue (6) opposée transversalement au sens (5) de circulation.

3. Dispositif (15) suivant la revendication 1 ou 2,
   **caractérisé en ce qu'**
   au moins l'un des capteurs (11) est constitué sous la forme d'un capteur optique ou inductif.

4. Dispositif (15) suivant l'une des revendications précédentes,
   **caractérisé en ce que**
   les capteurs (11) sont montés transversalement au sens (5) de circulation en étant sensiblement opposés directement.

5. Dispositif (15) suivant l'une des revendications précédentes,
   **caractérisé en ce que**
   les capteurs (11) considérés dans le sens (5) de circulation sont montés entre deux roues (6) du véhicule (1) ferroviaire.

6. Dispositif (15) suivant l'une des revendications précédentes,
   **caractérisé en ce que**
   les capteurs (11) sont montés transversalement au sens (5) de circulation sensiblement à une même distance d'un milieu (13) du véhicule (1) ferroviaire.

7. Dispositif (15) suivant l'une des revendications précédentes,
   **caractérisé en ce que**
   l'agencement (7) de capteurs est constitué pour déterminer la vitesse $\omega$ angulaire du véhicule (1) ferroviaire à l'aide de la formule $\omega = \frac{v_1 - v_2}{\Delta r}$, dans laquelle $v_1$ et $v_2$ sont des vitesses de position déterminées au moyen des capteurs (11) et $\Delta r$ est une distance entre les capteurs (11).

8. Dispositif (15) suivant l'une des revendications 1 à 6 précédentes,
   **caractérisé en ce que**
   l'agencement (7) de capteurs est constitué pour déterminer une vitesse moyenne du véhicule (1) ferroviaire.

9. Véhicule (1) ferroviaire,
   **caractérisé en ce que**
   le véhicule (1) ferroviaire a au moins un dispositif (15) de détermination de position suivant l'une des revendications précédentes.

10. Procédé de détermination de la position d'un véhicule (1) ferroviaire,

    dans lequel on détermine au moins deux vitesses de position en respectivement des positions du véhicule (1) ferroviaire différentes transversalement au sens de circulation,

dans lequel on traite les au moins deux vitesses de position et on les utilise pour la détermination de la position du véhicule (1) ferroviaire, dans lequel on détermine une vitesse $\omega$ angulaire du véhicule (1) ferroviaire, **caractérisé en ce que** l'on se procure des données GNSS par au moins un dispositif (8) de navigation par satellite du véhicule (1) ferroviaire et on vérifie les données GNSS ou une position, qui en est déterminée, dans lequel on compare une vitesse angulaire déterminée au moyen des données GNNS à la vitesse angulaire déterminée par l'agencement (7) de capteurs et on déclenche une action, si une différence entre les deux vitesses angulaires va au-delà d'une valeur limite déterminée à l'avance.

**IN DER BESCHREIBUNG AUFGEFÜHRTE DOKUMENTE**

**In der Beschreibung aufgeführte Patentdokumente**

- DE 102013001973 B3

**In der Beschreibung aufgeführte Nicht-Patentliteratur**

- **RALPH GLAUS**. *Kinematic track surveying by means of a multi-sensor platform*, 01 January 2006